# EUROPÄISCHE PATENTSCHRIFT

(11) **EP 3 538 285 B1**
(45) Veröffentlichungstag und Bekanntmachung des Hinweises auf die Patenterteilung: **23.12.2020**
(21) Anmeldenummer: 17797227.0
(22) Anmeldetag: 06.11.2017
(51) Int. Cl.: B25J 11/00, B05B 15/80, G01J 3/00, B05B 7/00, B44D 3/00, B05B 7/08

(54) **SPRÜHVERFAHREN ZUR BESCHICHTUNG EINES SUBSTRATS**
SPRAYING PROCESS FOR COATING A SUBSTRATE
PROCÉDÉ DE PULVÉRISATION POUR REVÊTIR UN SUBSTRAT

(30) Priorität: 08.11.2016 CH 14812016
(43) Veröffentlichungstag der Anmeldung: 18.09.2019
(73) Patentinhaber: Chemspeed Technologies AG, 4414 Füllinsdorf (CH)
(72) Erfinder: GUELLER, Rolf, 5027 Herznach (CH); MARCOS, Carine, 68870 Bartenheim (FR); NEUGEBAUER, Elisabeth, 79639 Grenzach-Wyhlen (DE)
(74) Vertreter: Bohest AG
(86) Internationale Anmeldenummer: PCT/CH2017/000095
(87) Internationale Veröffentlichungsnummer: WO 2018/085950

(56) Entgegenhaltungen:
- EP-A1- 2 218 513
- WO-A2-2013/134552
- DE-A1- 4 417 709
- DE-A1-102014 104 341

## Beschreibung

Die vorliegende Erfindung betrifft ein Sprühverfahren zur Beschichtung eines Substrats gemäss dem Oberbegriff des unabhängigen Patentanspruchs 1 und eine zur Durchführung des Verfahrens geeignete Sprühvorrichtung gemäss dem Oberbegriff des unabhängigen Patentanspruchs 10.

Ein wichtiger Schritt beim Testen von z.B. Farben bzw. Farbformulierungen, aber auch etwa Klebstoffen und Klebstoffformulierungen während deren Entwicklung ist das Applizieren der hergestellten Farb- oder Klebstoffprobe auf ein Testsubstrat. Eine Probe wird mit einer gewünschten Methode auf das Testsubstrat appliziert und anschliessend direkt oder nach einer Trocknungsphase nach gewünschten Kriterien getestet bzw. ausgemessen (Abriebtests, Farbmetrik, chemische und physikalische Beständigkeitstests etc.).

Als Testsubstrat werden üblicherweise standardisierte Platten aus Metall (z.B. Platten aus Stahl oder Aluminium), Karton, Holz, Glas oder Kunststoff verwendet. Eine weit verbreitete Methode für die Applikation der Probe bzw. die Beschichtung des Testsubstrats mit der Probe ist ein Sprühverfahren, bei welchem die Probe in einem Luftstrom zerstäubt wird und die dadurch entstandenen Farb- resp. Klebstofftröpfchen sich auf dem Substrat niederschlagen bzw. fein verteilen .

Im Zuge der Farb- und Klebstoffentwicklung werden oft umfangreiche Testreihen mit unterschiedlichen Proben durchgeführt. Dabei ist es zwingend notwendig, dass bei jedem Wechsel der Probe, die mit der Probe in Kontakt gekommenen Teile der eingesetzten Sprühvorrichtung gereinigt werden. Das Reinigen der Sprühvorrichtung etc. ist dabei oft sehr aufwändig und nimmt vergleichsweise mehr Zeit in Anspruch als der eigentliche Sprühvorgang. Um eine grosse Anzahl an unterschiedlichen Proben in kürzester Zeit zu applizieren und zu testen, ist es wichtig, den erforderlichen Reinigungsprozess der Applikationsvorrichtung möglichst wenig aufwändig und kurz zu halten und auch den Einsatz grösserer Mengen an Reinigungs- und Lösungsmitteln zu reduzieren, da sowohl durch die Beschaffung und speziell auch durch die Entsorgung der Reinigungs- und Lösungsmittel hohe Kosten anfallen und die Umwelt zusätzlich belastet wird.

Eine Sprühvorrichtung mit reduziertem Reinigungsaufwand ist in der US 2008/0012159 A1 beschrieben.

Die Sprühvorrichtung weist einen druckluftgespeisten Sprühkopf (wie bei herkömmlichen Sprühmethoden) mit einer axialen Hauptdüse und zwei Hornstrahldüsen auf, welcher im Wesentlichen einen kegelförmigen Luftstrom erzeugt. In den vom Sprühkopf erzeugten Luftstrom ist axial ein spritzenartig ausgebildeter Applikationsbehälter einführbar, welcher eine zu versprühende Substanz (Farbprobe) vorher aufgenommen hat. Der Applikationsbehälter ist mit einer kanülenartigen Spitze ausgestattet, welche in dem im Sprühkopf eingesetzten Zustand des Applikationsbehälters durch die axiale Hauptdüse des Sprühkopfs hindurchragt und ausserhalb des Sprühkopfs bzw. von dessen Hauptdüse ausmündet. Durch z.B. motorgesteuerten Vorschub des Spritzenkolbens des Applikationsbehälters kann die Substanz durch die Spitze des Applikationsbehälters in den vom Sprühkopf erzeugten Luftstrom eingebracht werden, wobei die Substanz dann im Luftstrom zerstäubt bzw. vernebelt wird. Durch die Verwendung eines separaten Applikationsbehälters kommt die zu versprühende Substanz nicht mit dem Sprühkopf in Berührung, so dass eine Reinigung des Sprühkopfs nach jedem Substanz-/Probenwechsel wegfällt. Der spritzenartig ausgebildete Applikationsbehälter selbst erfordert nur einen vergleichsweise geringen Reinigungsaufwand oder kann auch als Einmalbehälter ausgebildet und nach jeder Anwendung weggeworfen werden.

Die aus der US 2008/0012159 A1 bekannte Sprühvorrichtung löst zwar grundsätzlich das Reinigungsproblem bei solchen Sprühbeschichtungsprozessen, hat aber diverse andere Nachteile. Da die Applikationsbehälter in den Sprühkopf eingesetzt werden, müssen der Sprühkopf und die Applikationsbehälter baulich aufeinander abgestimmt sein. Das heisst, es kann nicht jeder beliebige handelsübliche Sprühkopf in Kombination mit jedem beliebigen handelsüblichen Applikationsbehälter verwendet werden. Das Einsetzen und Entfernen der Applikationsbehälter erfordert ausserdem einen verhältnismässig hohen Handhabungsaufwand. Und schliesslich stellen gerade das Einsetzen und die anschliessende Entnahme der Applikationsbehälter in den bzw. aus dem Sprühkopf ein nicht zu vernachlässigendes Kontaminationsrisiko dar, welches unter Umständen doch eine Reinigung des Sprühkopfs erforderlich macht.

Die EP 2 218 513 A1 offenbart eine Sprühvorrichtung zum elektrostatischen Laden und Einspritzen einer Probelösung in einen Gasstrom. Eine Spritze (Applikationsbehälter) mit der Probelösung ist vor dem Auslass eines Gasrohrs angeordnet. Durch das aus dem Gasrohr strömende Gas wird die aus der Spritze herausgepresste Probelösung zerstäubt und auf ein Substrat aufgetragen. Optional können Mittel zum Ausrichten der relativen Position zwischen dem Gasrohr und dem Auslass aus dem Applikationsbehälter vorhanden sein.

Je nachdem wie der Applikationsbehälter mit Probelösung gefüllt wird, kann es auch bei dieser Sprühvorrichtung zu Verunreinigungen mit Probelösung kommen, die dann beispielsweise auf den Sprühkopf fallen könnten oder bei einem Starten des Gasstroms durch diesen vom Applikationsbehälter weggerissen werden und unkontrolliert zum Substrat gelangen könnten.

Durch die vorliegende Erfindung soll nun ein verbessertes Sprühverfahren zur Verfügung gestellt werden, welches die beschriebenen Nachteile der bekannten Verfahren bzw. dafür eingesetzten Sprühvorrichtungen vermeidet. Konkreter soll ein Sprühverfahren der gattungsgemässen Art dahingehend verbessert werden, dass eine Kontaminierung des Sprühkopfs mit der zu versprühenden Substanz zuverlässig vermieden wird, dass das Verfahren in der Handhabung einfach und apparativ kostengünstig realisierbar ist und dass zu seiner Durchführung handelsübliche und in der Branche etablierte Sprühköpfe und Applikationsbehälter eingesetzt werden können.

Diese der Erfindung zugrundeliegende Aufgabe wird durch das erfindungsgemässe, im unabhängigen Patentanspruch 1 definierte Sprühverfahren und durch die im Patentanspruch 10 definierte Sprühvorrichtung gelöst. Besonders vorteilhafte Weiterbildungen und Ausgestaltungen des erfindungsgemässen Sprühverfahrens und der erfindungsgemässen Sprühvorrichtung ergeben sich aus den jeweils abhängigen Patentansprüchen.

Hinsichtlich des Sprühverfahrens besteht das Wesen der Erfindung in Folgendem: Bei einem Sprühverfahren zur Beschichtung eines Substrats mit einer in einem Gasstrom zerstäubten Substanz wird mittels eines Sprühkopfs ein das Substrat beaufschlagender Gasstrom erzeugt. Die Substanz liegt dabei in einem spritzenartigen, mit einer Applikationsspitze ausgestatteten Applikationsbehälter vor und wird aus diesem ohne Kontakt mit dem Sprühkopf in den Gasstrom eingebracht und durch diesen zerstäubt. Der die Substanz enthaltende Applikationsbehälter wird mit seiner Applikationsspitze ausserhalb des Sprühkopfs in einem (geringen) Abstand zu diesem quer zur Hauptströmungsrichtung des Gasstroms (mittig bzw. axial) in den Gasstrom eingeführt und die Substanz wird an dieser Stelle aus dem Applikationsbehälter in den Gasstrom eingebracht.

Durch die seitliche Einführung des Applikationsbehälters bzw. von dessen Applikationsspitze in den Gasstrom ausserhalb des Sprühkopfs wird einerseits jegliche Kontamination des Sprühkopfs zuverlässig vermieden. Insbesondere würden allfällige aussen an der Applikationsspitze haftende Substanztropfen während des Einführens der Applikationsspitze in den vorhandenen Gasstrom von diesem weggeblasen, bevor sie auf den Sprühkopf fallen können. Anderseits können unabhängig voneinander beliebige Kombinationen handelsüblicher Sprühköpfe und Applikationsbehälter eingesetzt werden. Ausserdem ist das Handling bei der Einführung des Applikationsbehälters bzw. dessen Applikationsspitze in den Gasstrom bzw. der Entfernung aus dem Gasstrom relativ einfach.

Ein weiterer Vorteil des erfindungsgemässen Sprühverfahrens besteht darin, dass die Dosiergeschwindigkeit der zu zerstäubenden Substanz unabhängig von der Geschwindigkeit des Gasstroms variiert werden kann.

Gemäss einer vorteilhaften Ausführungsform kann als Applikationsbehälter eine Wegwerfspritze oder eine Wegwerfpipette eingesetzt werden, wodurch der Reinigungsaufwand beim Substanzwechsel völlig entfällt.

Mit Vorteil wird der Applikationsbehälter mit Applikationsspitze aus einem Set von unterschiedlichen Applikationsbehältern mit unterschiedlichen Applikationsspitzen ausgewählt. Insbesondere können ohne oder mit geringem Aufwand verschiedene Spritzentypen (z.B. mit feineren Nadeln, mit viellöchrigen Nadeln) und vor allem auch verschiedene Spritzenvolumina eingesetzt bzw. gegeneinander ausgetauscht werden. Als Applikationsbehälter, aber auch als Applikationsspitzen sind eine Vielzahl von bereits kommerziell verfügbaren Produkten aus dem Bereich Pipettierung in unterschiedlichsten Ausführungen (bezüglich Material, Grösse, Ausbildungsform) einsetzbar, die hier der Einfachheit halber nicht weiter differenziert werden.

Zur Erzielung optimaler Sprühergebnisse wird vorteilhafterweise die Applikationsspitze des Applikationsbehälters in Hauptströmungsrichtung des Gasstroms gemessen von einer axialen Hauptdüse des Sprühkopfs in einem Abstand von 0.01-5 cm, vorzugsweise 0.1-0.5 cm, angeordnet. Dieser Abstand ist z.B. abhängig von der zu applizierenden Formulierung bzw. Substanz, der Spitzenart, der Umgebungstemperatur, der Umgebungsfeuchtigkeit oder der eingestellten Sprühform (Breitstrahl, Rundstrahl) und es ist deshalb vorteilhaft, wenn dieser Abstand variiert werden kann, um ein optimales oder gewünschtes Sprühergebnis zu erzielen.

Zweckmässigerweise wird ein Sprühkopf eingesetzt, der zwei gegenüberliegende Hornluftdüsen aufweist, welche zwei einwärts gerichtete Homgasströme erzeugen, wobei die Applikationsspitze des Applikationsbehälters im Kreuzungsbereich der beiden Horngasströme angeordnet wird. Die zusätzlichen Horngasströme sorgen für eine zusätzliche Vernebelung und definieren die Form des Sprühergebnisses (Rundstrahl, Breitstrahl).

Vorteilhafterweise wird das Substrat während des Sprühvorgangs bzw. während der Beaufschlagung mit der zerstäubten Substanz in einer quer zur Hauptströmungsrichtung des Gasstroms ausgerichteten Ebene ein- oder zweidimensional bewegt. Alternativ werden der Sprühkopf und der Applikationsbehälter mit Applikationsspitze während der Beaufschlagung des Substrats mit der zerstäubten Substanz in einer oder zwei Dimensionen quer zur Hauptströmungsrichtung des Gasstroms bewegt. Das Substrat wird so komplett und mit gleichmässiger Schichtdicke beschichtet.

Im Hinblick auf ein möglichst optimales Sprühergebnis wird der Sprühkopf vorteilhafterweise mit einem Druck von 1-10 bar, vorzugsweise 3-4 bar, und einem Gasdurchsatz von 100-1000 l/min, vorzugsweise 200-600 l/min, betrieben.

Gemäss einer vorteilhaften Weiterbildung werden gleichzeitig oder sequentiell die Applikationsspitzen von mehr als einem Applikationsbehälter in den Gasstrom L eingebracht und die in den Applikationsbehältern enthaltenen, unterschiedlichen zu sprühenden Substanzen werden entweder nacheinander oder gleichzeitig in den Gasstrom L abgegeben und zerstäubt

Diese Ausbildung des Sprühverfahrens erlaubt es, beispielsweise mehrere unterschiedliche Farbformulierungen F entweder unmittelbar nacheinander oder sogar gleichzeitig auszusprühen, was eine Durchmischung der unterschiedlichen Farbnebel FN ermöglicht. Dies wäre beispielsweise bei der Applikation von ZweikomponentenSystemen von Vorteil. Es könnte so aber auch zusätzlich zur Farbformulierung F ein Lösungsmittel oder eine andere Hilfssubstanz in den Sprühnebel zugegeben werden, zum Beispiel um die Verdunstung der in der Farbformulierung enthaltenen Lösungsmittel bei hohen Umgebungstemperaturen zu kompensieren.

Hinsichtlich der Sprühvorrichtung besteht das Wesen der Erfindung in Folgendem: Eine Sprühvorrichtung zur Durchführung des erfindungsgemässen Sprühverfahrens umfasst einen Sprühkopf zur Erzeugung eines das Substrat beaufschlagenden Gasstroms und einen mit einer Applikationsspitze ausgestatteten Applikationsbehälter zur Aufnahme einer im Gasstrom zu zerstäubenden Substanz. Die Sprühvorrichtung umfasst ferner einen Roboter, vorzugsweise einen Mehrachsen-Roboter, zur Aufnahme des Applikationsbehälters aus einem Vorratsbehälter und zur Einbringung der Applikationsspitze des aufgenommenen Applikationsbehälters in den vom Sprühkopf erzeugten Sprühstrahl quer zur Hauptströmungsrichtung des Gasstroms an einer Position ausserhalb des Sprühkopfs in einem Abstand zu diesem.

Unter Roboter, speziell Mehrachsen-Roboter, wird im Rahmen dieser Erfindung jede Art von motorisch angetriebenen, elektrisch bzw. elektronisch gesteuerten und mit Greifmechanismen ausgestatteten Manipulationsmitteln verstanden, welche gesteuert Gegenstände greifen und in mindestens zwei Raumrichtungen bewegen können.

Vorteilhafterweise umfasst die Sprühvorrichtung auch Austragmittel zur Ausbringung von im Applikationsbehälter enthaltener Substanz aus dem Applikationsbehälter in den vom Sprühkopf erzeugten Gasstrom.

Zweckmässigerweise ist der Roboter dazu ausgebildet, einen teilweise oder ganz entleerten Applikationsbehälter nach dessen Benutzung aus dem Gasstrom zu entnehmen und vorzugsweise in einen Abfallbehälter zu werfen.

Vorteilhafterweise ist die Sprühvorrichtung dazu ausgebildet, den Abstand zwischen dem Sprühkopf und der Applikationsspitze und/oder den Abstand zwischen der Applikationsspitze und dem Substrat automatisch oder manuell zu verstellen. Dies erlaubt die Anpassung an die unterschiedlichsten Betriebsbedingungen und die Optimierung des Sprühbilds auf dem Substrat.

Vorteilhafterweise ist die Sprühvorrichtung zur sequentiellen oder gleichzeitigen Einführung der Applikationsspitzen von zwei oder mehreren Applikationsbehältern in den Gasstrom ausgebildet. Dies erlaubt die sequentielle bzw. simultane Vernebelung zweier oder mehrerer Substanzen.

Zweckmässigerweise ist der Applikationsbehälter eine Wegwerfspritze oder eine Wegwerfpipette, welche nach Gebrauch entsorgt werden kann und nicht gereinigt werden muss.

Zweckmässigerweise ist die Applikationsspitze gerade ausgebildet und eine Auslassöffnung der Applikationsspitze mündet rechtwinklig in den Gasstrom aus, so dass die zu applizierende Substanz rechtwinklig zur Hauptströmungsrichtung des Gasstroms in diesen einbringbar ist.

In einer ebenfalls vorteilhaften Variante ist die Applikationsspitze gerade ausgebildet und weist mindestens eine seitliche Auslassöffnung auf, durch die die zu applizierende Substanz in den Gasstrom einbringbar ist. Die zu applizierende Substanz ist so in Hauptströmungsrichtung des Gasstroms in diesen einbringbar.

In einer alternativen vorteilhaften Variante ist die Applikationsspitze abgewinkelt ausgebildet und eine Auslassöffnung der Applikationsspitze mündet in Richtung des Gasstroms aus, so dass die zu applizierende Substanz parallel zur Hauptströmungsrichtung des Gasstroms in diesen einbringbar ist.

Vorteilhafterweise ist der Roboter dazu ausgebildet, den Sprühkopf zusammen mit dem Applikationsbehälter in wenigstens einer Dimension quer zur Hauptströmungsrichtung des Gasstroms zu bewegen. Dadurch kann eine gleichmässige Beaufschlagung des Substrats über dessen gesamte zu besprühende Fläche erreicht werden.

Alternativ oder zusätzlich weist die Sprühvorrichtung einen zweiten Roboter zur Halterung eines Substrats und zur Bewegung desselben in mindestens einer Richtung quer zur Hauptströmungsrichtung des Gasstroms auf. Auch dadurch kann eine gleichmässige Beaufschlagung des Substrats über dessen gesamte zu besprühende Fläche erreicht werden.

Vorteilhafterweise umfasst die Sprühvorrichtung eine elektronische Steuerung für den Roboter und gegebenenfalls den zweiten Roboter, für Austragmittel zur Ausbringung von im Applikationsbehälter enthaltener Substanz aus dem Applikationsbehälter und für eine Gaszufuhr zum Sprühkopf, wobei die Steuerung so programmiert ist, dass sie die für die Durchführung des Sprühverfahrens erforderlichen Abläufe selbständig steuern kann. Auf diese Weise kann die Sprühvorrichtung automatisch arbeiten.

In einer vorteilhaften Ausführungsvariante ist die elektronische Steuerung so programmiert, dass sie die für die Durchführung des Sprühverfahrens erforderlichen Abläufe und Parameter iterativ optimiert. Die elektronische Steuerung ermöglicht so ein automatisiertes Optimieren der Abläufe und speziell der Parameter, die das Sprühbild beeinflussen, insbesondere Geschwindigkeit des Gasstroms, Dosiergeschwindigkeit der Substanzausbringung, Distanzen zwischen Sprühkopf, Applikationsspitze und Substrat, Homgasströmung etc. Dazu wird nach einem ersten Sprühvorgang das besprühte Substrat in einem geeigneten Analysegerät beispielsweise im Hinblick auf die Farbe und die Homogenität der Farbschicht, etc. geprüft, anschliessend der Sprühvorgang mit einem oder mehreren geänderten Parametern wiederholt, das neue Substrat ebenfalls geprüft und über einen Vergleich der ersten und der nachfolgenden Prüfergebnisse entschieden, ob die Parameter-Änderung zu einer Verbesserung oder Verschlechterung des Sprühergebnisses geführt hat. So lassen sich iterativ über mehrere Sprühvorgänge und anschliessende Prüfung der Sprühergebnisse die optimalen Parameter für den Sprühvorgang automatisch ermitteln. Im Detail könnte ein solcher iterativer Optimierungsprozess folgendermassen aussehen:
1) Sprühen einer Substanz, beispielsweise Farbe, auf ein Substrat mit einem Parametersatz A.
2) Analyse des Substrats in einem Analysegerät auf Inhomogenitäten, wobei das Analysegerät beispielsweise Inhomogenitäten, z.B. in Form kleiner Bläschen auf der Farboberfläche, feststellt.
3) Das Sprühverfahren wird wiederholt, aber mit einem durch die Software des Steuercomputers gegenüber Parametersatz A leicht geänderten Parametersatz B, bei dem z.B. die Stärke des Gasstroms leicht verringert wurde.
4) Die Analyse wird wiederholt und zeigt z.B. eine bereits geringere Bläschenbildung.
5) Ein weiterer Sprühvorgang, mit einem ebenfalls durch die Software des Steuercomputers angepassten Parametersatz C (mit z.B. in diesem Fall leicht reduzierter Geschwindigkeit der Ausbringung der Farbe in den Gasstrom), wird durchgeführt.
6) Eine weitere Analyse des neuen Sprühergebnisses zeigt nun beispielsweise keinerlei Inhomogenitäten der aufgesprühten Farbschicht mehr.
7) Die Software der elektronischen Steuerung speichert den optimierten Parametersatz C und verwendet ihn für weitere Sprühvorgänge.

Im Folgenden wird die Erfindung anhand von in den Zeichnungen dargestellten Ausführungsbeispielen detaillierter beschrieben. Es zeigen:
- Fig. 1a-1d -: eine schematische Darstellung eines Ausführungsbeispiels des erfindungsgemässen Sprühverfahrens,
- Fig. 2a-2d -: eine Seitenansicht, eine Aufsicht, eine Frontalansicht und eine Schnittansicht eines für das erfindungsgemässe Sprühverfahren geeigneten Sprühkopfs,
- Fig. 3 -: eine schematische Seitenansicht eines Ausführungsbeispiels der erfindungsgemässen Sprühvorrichtung im Ruhezustand,
- Fig. 4 -: eine Aufsicht der Sprühvorrichtung von Fig. 3 in einem für den Sprühvorgang bereiten Zustand,
- Fig. 5 -: eine Seitenansicht analog Fig. 3 der Sprühvorrichtung während eines Sprühvorgangs,
- Fig. 6 -: eine Skizze zur Erläuterung der Bewegung eines Substrats relativ zum Sprühkopf,
- Fig. 7a-b -: je eine Skizze zweier möglicher Ausbildungsformen von Applikationsspitzen und
- Fig. 8 -: ein gegenüber dem Ausführungsbeispiel gemäss Fig. 5 leicht modifiziertes Ausführungsbeispiel der Sprühvorrichtung.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen.

Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

Im Folgenden wird die Erfindung rein beispielsweise im Zusammenhang mit der Sprühapplikation einer flüssigen Farbformulierung auf ein Substrat beschrieben. Es versteht sich jedoch, dass das erfindungsgemässe Verfahren und die entsprechende erfindungsgemässe Vorrichtung grundsätzlich auch für die Sprühapplikation anderer Substanzen als Farbformulierungen oder Klebstoffen bzw. Klebstoffformulierungen einsetzbar sind, sofern die betreffenden Substanzen zu einer Zerstäubung bzw. Vernebelung (Aerosol-Bildung) in einem Luft- bzw. allgemeiner Gasstrom geeignet sind. Neben flüssigen Substanzen kommen dafür grundsätzlich auch pulverförmige Substanzen in Frage. Zur Zerstäubung bzw. Vernebelung der Substanz wird normalerweise Druckluft eingesetzt, es ist jedoch auch möglich, irgendein anderes Gas bzw. Gasgemisch dafür einzusetzen. Die folgenden Erläuterungen beschränken sich der Einfachheit halber auf eine Farbformulierung als zu applizierende Substanz und (Druck-)Luft als für die Vernebelung bzw. Zerstäubung der Substanz eingesetztes Gasgemisch.

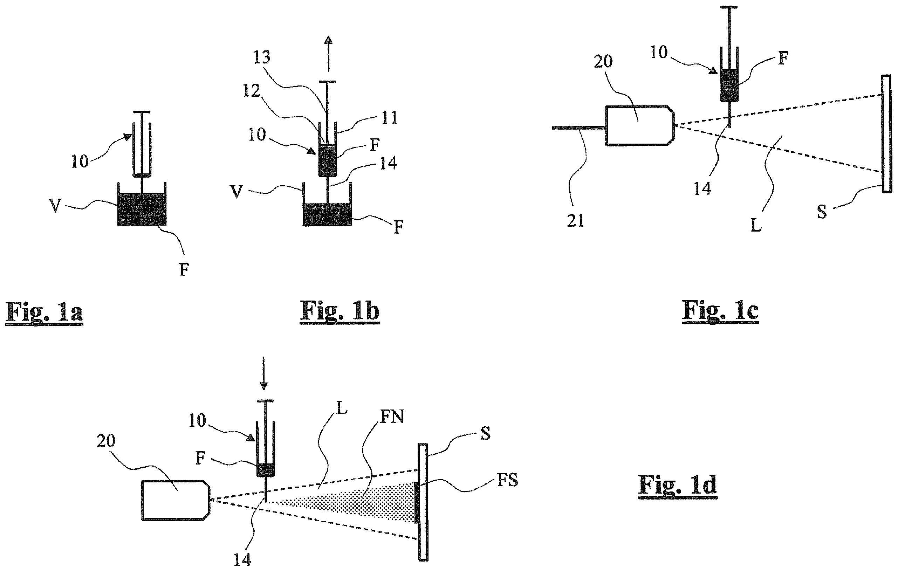

In den Figuren 1a-1d sind die typischen Schritte des erfindungsgemässen Sprühverfahrens dargestellt.

Eine zu applizierende Substanz - hier im Beispiel eine flüssige Farbformulierung F - steht in einem Vorratsbehälter V bereit (Fig. 1a). Eine gewünschte (relativ kleine) Menge der Farbformulierung F wird aus dem Vorratsbehälter V in einen Applikationsbehälter 10 aufgezogen (Fig. 1b). Der Applikationsbehälter 10 ist spritzenartig ausgebildet und weist eine Kammer 11, einen darin axial verstellbaren Kolben 12, einen Kolbenstempel 13 und eine Applikationsspitze 14 auf. In der Praxis wird als Applikationsbehälter 10 vorteilhafterweise eine handelsübliche Wegwerfspritze oder eine (Kolben-)Pipette eingesetzt. Die Applikationsspitze 14 ist vorteilhaft als handelsübliche Dosiernadel oder Kanüle ausgelegt.

Diese beiden eben beschriebenen vorbereitenden Schritte können auch ausserhalb des eigentlichen Sprühverfahrens erfolgen, wobei eine gewünschte Anzahl von Applikationsbehältern 10 mit unterschiedlichem oder gegebenenfalls auch gleichem Inhalt bereitgestellt werden.

Für das Sprühverfahren wird unter Einsatz eines Sprühkopfs 20 ein im Wesentlichen kegelförmiger Luftstrom (bzw. allgemein Gasstrom) L erzeugt, wobei der Sprühkopf 20 so im Abstand vor einem zu besprühenden (ebenen) Substrat S angeordnet ist, dass der Luftstrom L das Substrat S beaufschlagt (Fig. 1c). Der Sprühkopf 20 ist im Betrieb über eine Versorgungsleitung 21 an eine nicht dargestellte Druckluftquelle angeschlossen. Der Druck der Druckluft beträgt beispielsweise 3-4 bar, der Luftdurchfluss etwa 200-600 L/min.

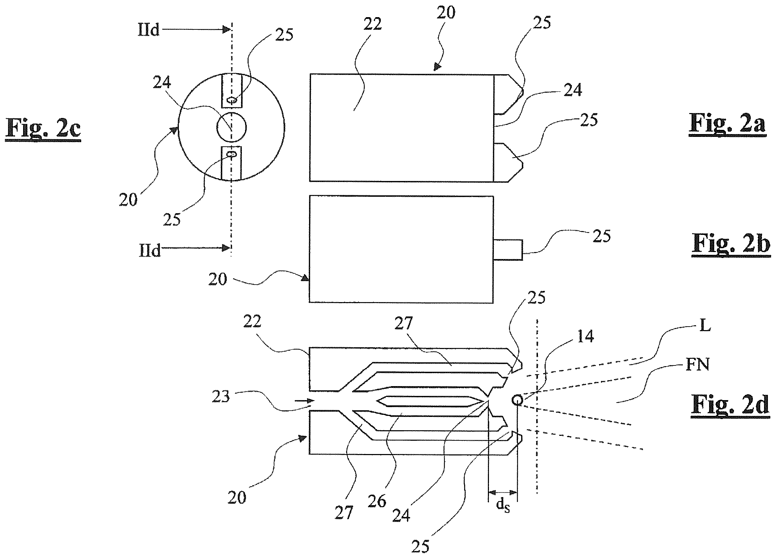

Der Applikationsbehälter 10 wird mit seiner Applikationsspitze 14 seitlich, also quer zur Hauptströmungsrichtung des Luftstroms L in den vom Sprühkopf 20 erzeugten Luftstrom L eingeführt, so dass sich das freie Ende (die Auslassöffnung) der Applikationsspitze 14 in einem relativ geringen axialen Abstand d_{S} (Fig. 2d) vom Sprühkopf 20 etwa mittig (axial) im Luftstrom L befindet.

Durch axiale Verstellung des Kolbens 12 in der Kammer 11 des Applikationsbehälters 10 wird Farbformulierung F aus dem Applikationsbehälter 10 in den Luftstrom L eingebracht und dort zerstäubt. Der aus dem Gemisch von Luft und feinsten Farbtröpfchen bestehende Sprühnebel ist in Fig. 1d mit FN bezeichnet. Der Sprühnebel FN beaufschlagt das Substrat S und erzeugt auf diesem einen Beschichtungsfleck FS.

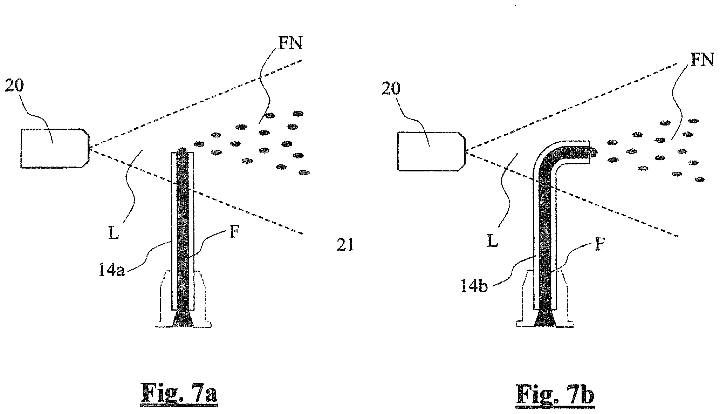

Die Austrittsöffnung der Applikationsspitze 14 des Applikationsbehälters 10 muss ausreichend klein sein, um sehr feine Tröpfchen der Farbformulierung F in den Luftstrom L abzugeben. Der Abstand d_{S} der Applikationsspitze 14 vom Sprühkopf 20 bzw. dessen Hauptdüse 24 beträgt nur wenige Millimeter, typisch etwa 0.01-5 cm. Die Applikationsspitze 14 kann, wie in Fig. 7a als 14a dargestellt, gerade sein und in einem rechten Winkel in den Luftstrom L hineinragen, so dass die Auslassöffnung der Spitze ebenfalls im rechten Winkel zum Luftstrom liegt, oder aber, wie in Fig. 7b dargestellt, als gebogene Applikationsspitze 14b vorliegen, bei der der vordere Teil der Spitze so umgebogen ist, dass die Auslassöffnung der Spitze parallel zum Luftstrom liegt. Alternativ kann die Applikationsspitze auch mit einer oder mehreren seitlichen Auslassöffnungen versehen sein. Möglich sind auch Ausmündungen der Auslassöffnung der Applikationsspitze in den Luftstrom in beliebig anderen Winkeln als rechtwinklig oder parallel zur Hauptströmungsrichtung des Luftstroms L.

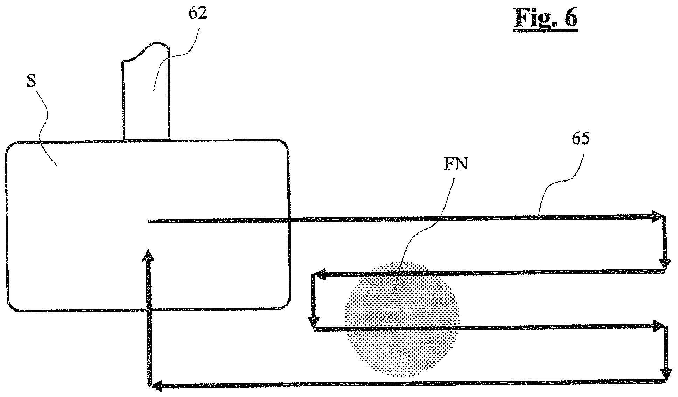

Um auf der ganzen zu besprühenden Fläche des Substrats S eine homogene Farbschicht aufzutragen, wird das Substrat S, z.B. wie in Fig. 6 skizziert, in seiner eigenen Ebene in einer oder zwei Richtungen (horizontal und/oder vertikal) bewegt. Dies kann auch von Vorteil sein, wenn auf dem Substrat S eine grössere Fläche beschichtet werden soll, als der Sprühnebel FN unmittelbar beaufschlagen kann. Ein möglicher Verfahrweg des Substrats S ist in Fig. 6 mit 65 bezeichnet. Der axiale Abstand zwischen dem Substrat S und dem Sprühkopf 20 bleibt dabei konstant, könnte in einer vorteilhaften Ausführung aber auch während einem oder zwischen mehreren Sprühvorgängen angepasst werden. Alternativ zur Bewegung des Substrats S kann auch der Sprühkopf 20 zusammen mit der Applikationsspitze 14 des Applikationsbehälters 10 quer zur Strömungsrichtung des Sprühnebels FN in einer oder zwei Dimensionen verstellt werden.

Als Sprühkopf 20 kann ein handelsüblicher Sprühkopf eingesetzt werden. Ein Beispiel eines geeigneten Sprühkopfs 20 ist in den Figuren 2a-2d in einer Dreiseitenansicht (Figuren 2a-c) und einer Schnittansicht (Fig. 2d) dargestellt.

Der Sprühkopf 20 weist ein Gehäuse 22 auf, an dessen einem Ende ein Einlass 23 für den Anschluss der Druckluftversorgungsleitung 21 (Fig. 1c) angeordnet ist. Am anderen Ende des Gehäuses sind eine axiale Hauptdüse 24 und zwei diametral gegenüberliegende Hornluftdüsen (bzw. allgemein Horngasdüsen) 25 angeordnet. Die axiale Hauptdüse 24 und die beiden Hornluftdüsen 25 sind mit dem Einlass 23 über im Gehäuse 22 vorgesehene Leitungen 26 bzw. 27 kommunizierend verbunden. Die Hauptdüse 24 und die beiden Hornluftdüsen 25 erzeugen zusammen den schon genannten, im Wesentlichen kegelförmigen Luftstrahl L, wobei dieser aufgrund der von den beiden Hornluftdüsen 25 erzeugten, einwärts gerichteten, vorteilhaft justierbaren Hornluftströme (bzw. allgemein Horngasströme) in seiner Form zwischen Breit- und Rundstrahl variiert werden kann.

Als Sprühkopf könnte auch ein handelsüblicher Sprühkopf mit Zufuhröffnung(en) für zu versprühende Substanz eingesetzt werden, wobei dann aber dessen Zufuhröffnung(en) für zu versprühende Substanz inaktiv bzw. verschlossen wäre(n), der Sprühkopf also nur zur Erzeugung des Gasstroms dienen würde.

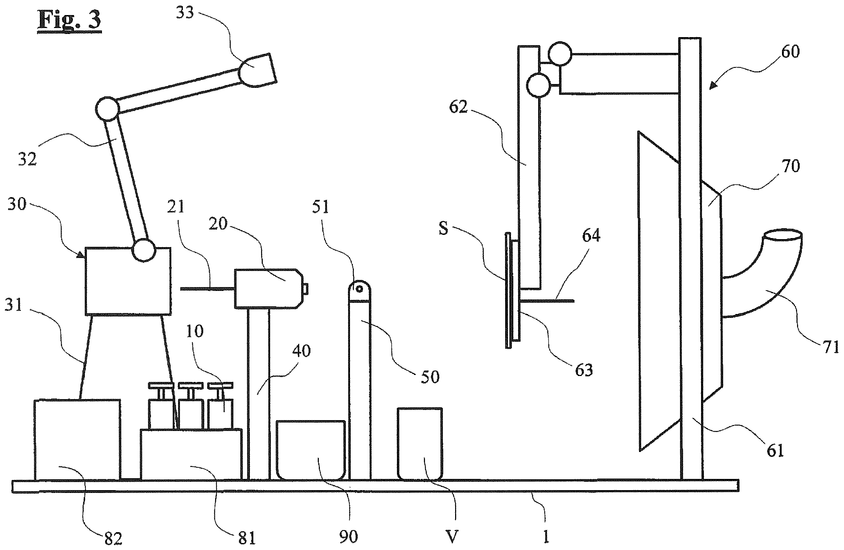

Die Figuren 3-5 zeigen ein Ausführungsbeispiel einer kompletten Sprühvorrichtung, die zur vollautomatischen Durchführung des erfindungsgemässen Sprühverfahrens geeignet ist.

Die Sprühvorrichtung ist auf einer Grundplatte 1 aufgebaut. Auf der Grundplatte 1 sind ein erster Mehrachsen-Roboter 30, eine Halterung 40 für den Sprühkopf 20, eine Halterung 50 für einen Applikationsbehälter 10, ein zweiter Mehrachsen-Roboter 60 und eine Sprühkammer 70 angeordnet. Ferner befinden sich auf der Grundplatte 1 ein Magazin 81 für bereitgestellte Applikationsbehälter 10, ein Abfallbehälter 82 für leere bzw. weggeworfene Applikationsbehälter 10 und ein Sammelbehälter 90 zur Aufnahme von fertig besprühten Substraten S.

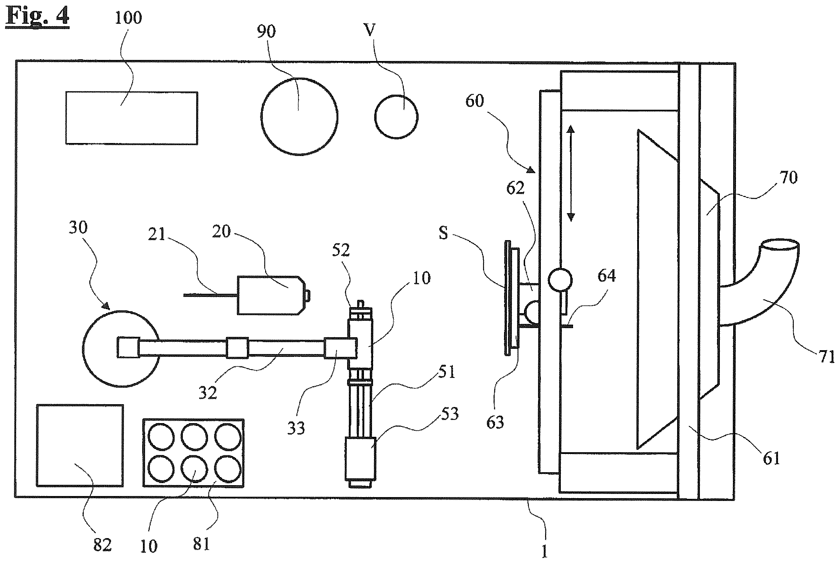

Der auf einem Montagegestell 31 aufgebaute erste (Mehrachsen-)Roboter 30 umfasst als wesentlichstes Element einen Mehrachsen-Roboterarm 32, an dessen vorderstem Ende ein Greifmechanismus 33 zur Erfassung eines Applikationsbehälters 10 angeordnet ist. Die Halterung 40 ist im Wesentlichen ein Standfuss. An deren oberem Ende ist der Sprühkopf 20 montiert. Der Sprühkopf ist (im Betrieb der Vorrichtung) über die Versorgungsleitung 21 an eine nicht dargestellte Druckluftquelle angeschlossen. Die Halterung 50 ist ebenfalls im Wesentlichen ein Standfuss, an dessen oberem Ende eine Aufnahmevorrichtung 51 und eine Führung 52 (Fig. 4) für einen Applikationsbehälter 10 angeordnet sind. An der Halterung 50 ist ausserdem noch eine Antriebsvorrichtung 53 für den Kolben 12 eines eingelegten Applikationsbehälters 10 angeordnet (Fig. 4). Bei dieser Antriebsvorrichtung kann es sich um einen Vorschubantrieb handeln, wie er beispielsweise von vollautomatischen Pipettiersystemen bekannt ist. Der Kolben 12, der Kolbenstempel 13 und die Antriebsvorrichtung 53 bilden zusammen Austragmittel zur Ausbringung der im Applikationsbehälter 10 befindlichen Substanz in den Gasstrom L.

Der ebenfalls auf einem Montagegestell 61 aufgebaute zweite Mehrachsen-Roboter 60 umfasst als wesentlichstes Element einen Roboterarm 62, der nach Art eines Kreuztisches vertikal (senkrecht zur Grundplatte 1) und horizontal (senkrecht zur Zeichenebene) bewegt werden kann. Am freien Ende des Roboterarms 62 ist eine Haltevorrichtung 63 für ein zu beschichtendes Substrat S angeordnet. Die Haltevorrichtung 63 kann z.B. als Vakuum-Haltevorrichtung ausgebildet sein, die (im Betrieb) über eine Leitung 64 mit einer nicht dargestellten Vakuum- oder Unterdruckquelle verbunden ist.

Die Sprühkammer 70 bildet einen vorteilhaft mit einem Filter versehenen Abzug für vagabundierenden bzw. am Substrat vorbeigegangenen Sprühnebel und ist über ein Absaugrohr 71 mit einer nicht dargestellten Absaugvorrichtung verbunden.

Die gegenseitige Anordnung der beschriebenen Komponenten der Sprühvorrichtung ist aus der Fig. 3 (Seitenansicht) und der Fig. 4 (Ansicht von oben) klar sichtbar.

Ferner umfasst die Sprühvorrichtung noch eine elektronische Steuerung 100, welche sowohl die beiden Mehrachsen-Roboter 30 und 60, die Antriebsvorrichtung 53 für den Vorschub des Kolbens 12 des Applikationsbehälters, als auch die benötigten Ventile (Vakuum, Sprühkopfsteuerung) ansteuert. Die Steuerung 100 muss nicht unbedingt auf der Grundplatte 1 angeordnet sein, sondern kann z.B. auch durch einen entsprechend verbundenen externen Rechner realisiert sein. Die Steuerung 100 kann auch dazu ausgebildet sein, über hier nicht dargestellte Verstellmittel den Abstand zwischen der Applikationsspitze des Applikationsbehälters und dem Sprühkopf und gegebenenfalls auch den Abstand zwischen der Applikationsspitze des Applikationsbehälters und dem Substrat zu verstellen, entweder aufgrund eines manuellen Befehls oder selbsttätig anhand z.B. einer Analyse des Sprühbilds auf dem Substrat.

In Fig. 3 ist die Sprühvorrichtung in Ruhekonfiguration dargestellt Im Magazin 81 ist eine Anzahl von bereits vorgängig befüllten Applikationsbehältern 10 bereitgestellt. Ein zu besprühendes Substrat S ist an der Haltevorrichtung 63 des zweiten Mehrachsen-Roboters 60 festgehalten.

Die Funktionsweise der Sprühvorrichtung ist wie folgt, wobei alle Abläufe von der Steuerung 100 initiiert und kontrolliert werden:
Auf den Startbefehl der Steuerung 100 bewegt sich der Arm 32 des ersten Mehrachsen-Roboters 30 über das Magazin 81 und nimmt mit seinem Greifmechanismus 33 einen dort bereitgestellten Applikationsbehälter 10 auf. Nun wird der Applikationsbehälter 10 vom Mehrachsen-Roboter 30 zum Vorratsbehälter V bewegt und die Spitze des Applikationsbehälters in die Farbformulierung F getaucht. Hier wird eine gewünschte (relativ kleine) Menge der Farbformulierung F durch zurückziehen des Kolbens 13 (siehe Fig. 1b) in den Applikationsbehälter 10 aufgesaugt. Daraufhin bewegt sich der Arm 32 des Mehrachsen-Roboters 30 über die Halterung 50 und fährt mit dem Applikationsbehälter 10 in die Aufnahmevorrichtung 51 und Führung 52 der Halterung ein (Fig. 4). Die Spitze 14 des Applikationsbehälters 10 befindet sich dabei, wie im Zusammenhang mit den Figuren 1c und 1d beschrieben, im axialen Abstand vor dem Sprühkopf 20 im Wesentlichen etwa in der Mitte des vom Sprühkopf 20 erzeugten Luftstroms L. Vorteilhafterweise lässt sich der Abstand zwischen Sprühkopf 20 und Applikationsspitze 14 automatisch während dem Sprühvorgang oder manuell zwischen einzelnen Sprühvorgängen so verändern, dass sich das Sprühbild (beeinflusst Beschichtungsfleck FS) in Grösse und Farbnebel-Dichte einstellen lässt.

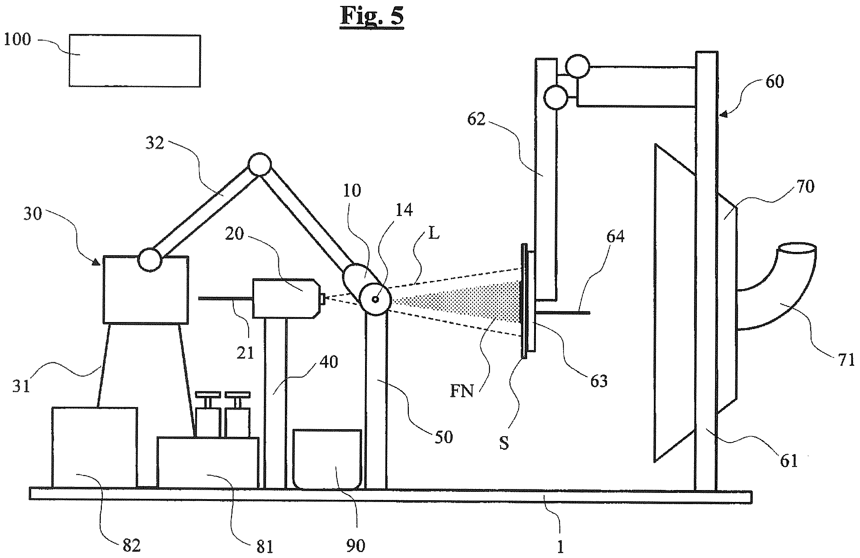

Nachdem der Sprühkopf 20 aktiviert wurde und der genannte Luftstrom stabil ist, verschiebt die Antriebsvorrichtung 53 auf der Halterung 50 den Kolben 12 des Applikationsbehälters 10, wobei die im Applikationsbehälter 10 befindliche Farbformulierung F nach und nach aus diesem in den Luftstrom L eingebracht wird und durch dessen Zerstäubung ein Farbformulierungsnebel FN entsteht, der wiederum das Substrat S beaufschlagt (Fig. 5). Die Bewegung des Kolbens 12 des Applikationsbehälters 10 kann alternativ auch durch den ersten Mehrachsen-Roboter 30 mittels dessen Greifmechanismus 33 erfolgen. Die Geschwindigkeit, mit der die Farbformulierung F in den Luftstrom L abgegeben wird, und/oder der Luftstrom selbst (Luftmenge, Luftgeschwindigkeit) lassen sich variieren, um das Sprühbild zu verändern.

Bei Bedarf kann das Substrat S mittels des zweiten Mehrachsen-Roboters 60 während des Sprühvorgangs auf und ab sowie hin und her bewegt werden, wie dies in Fig. 6 skizziert ist. Vorteilhafterweise lässt sich dabei auch der Abstand zwischen Applikationsspitze 14 und Substrat S während dem Sprühvorgang oder manuell zwischen einzelnen Sprühvorgängen so verändern, dass sich das Sprühbild (beeinflusst Beschichtungsfleck FS) in Grösse und Farbnebel-Dichte einstellen lässt.

Nach dem Ende des Sprühvorgangs wird der Applikationsbehälter 10 mittels des ersten Mehrachsen-Roboters 30 in den Abfallbehälter 82 geworfen. Das fertig besprühte Substrat S wird anschliessend im Sammelbehälter 90 abgelegt. Auch dies kann z.B. mittels des ersten Mehrachsen-Roboters 30 erfolgen, sofern dieser mit geeigneten Mechanismen zum Ergreifen des Substrats ausgerüstet ist.

Bei Bedarf werden die beschriebenen Abläufe mit einem neuen Substrat und einem neuen Applikationsbehälter wiederholt.

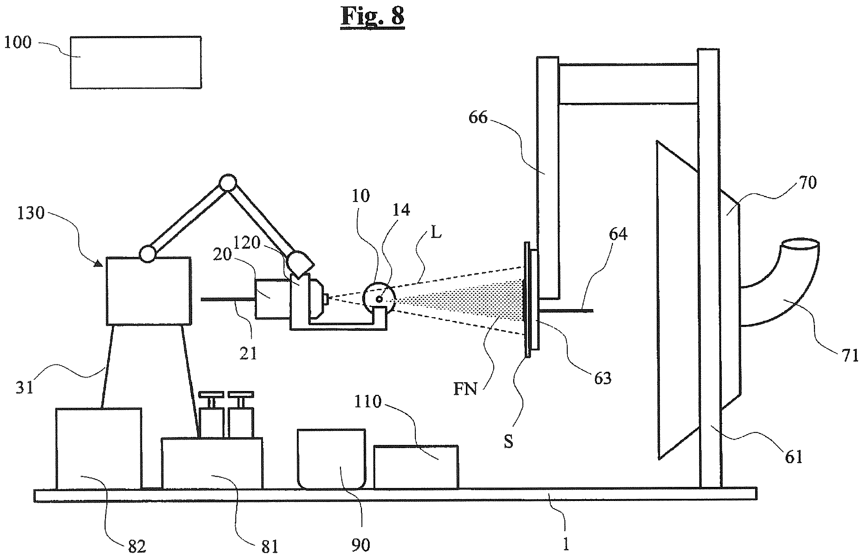

Eine weitere vorteilhafte Ausführungsform der erfindungsgemässen Sprühvorrichtung verfügt, wie in Fig. 8 dargestellt, anstelle des ersten und zweiten Roboters über einen einzelnen Multifunktions-Roboter 130, der die Funktionen dieser beiden Roboter übernimmt: Der Multifunktions-Roboter 130 nimmt z.B. den Applikationsbehälter 10 mit Applikationsspitze 14 auf und fixiert diese in einem auf einer Parkstation 110 gelagerten, vom Multifunktions-Roboter aufnehmbaren Sprühwerkzeug 120 mit eingebautem Sprühkopf 20 und Applikationsbehälter-Halterung 51 inklusive Antrieb 53 (letztere beide in Fig. 8 zur Vereinfachung nicht zeichnerisch dargestellt), nimmt anschliessend dieses Sprühwerkzeug 120 auf und bewegt es während dem Sprühvorgang am fix auf einem Substrathalter 66 angebrachten Substrat S vorbei (siehe auch Fig. 6).

In einer weiteren, zeichnerisch nicht dargestellten Ausführungsform ist die Sprühvorrichtung dazu ausgebildet, gleichzeitig oder sequentiell die Applikationsspitzen 14 von mehr als einem Applikationsbehälter 10 in den Luftstrom L des Sprühkopfs 20 einzubringen. Dies erlaubt es, mehrere unterschiedliche Farbformulierungen F entweder unmittelbar nacheinander oder sogar gleichzeitig auszusprühen, was eine Durchmischung der unterschiedlichen Farbnebel FN ermöglicht. Dies ist beispielsweise bei der Applikation von ZweikomponentenSystemen von Vorteil. Es könnte so aber auch zusätzlich zur Farbformulierung F ein Lösungsmittel oder eine andere Hilfssubstanz in den Sprühnebel zugegeben werden, zum Beispiel um die Verdunstung der in der Farbformulierung enthaltenen Lösungsmittel bei hohen Umgebungstemperaturen zu kompensieren.

## Patentansprüche

1. Sprühverfahren zur Beschichtung eines Substrats mit einer in einem Gasstrom zerstäubten Substanz (F), wobei mittels eines Sprühkopfs (20) ein das Substrat (S) beaufschlagender Gasstrom (L) erzeugt wird, und wobei die Substanz (F) in einem spritzenartigen, mit einer Applikationsspitze (14; 14a; 14b) ausgestatteten Applikationsbehälter (10) vorliegt und aus diesem ohne Kontakt mit dem Sprühkopf (20) in den Gasstrom (L) eingebracht und durch diesen zerstäubt wird, **dadurch gekennzeichnet, dass** der die Substanz (F) enthaltende Applikationsbehälter (10) mit seiner Applikationsspitze (14; 14a; 14b) ausserhalb des Sprühkopfs (20) in einem Abstand (d_{S}) zu diesem quer zur Hauptströmungsrichtung des Gasstroms (L) in den Gasstrom (L) eingeführt und die Substanz (F) an dieser Stelle in den Gasstrom (L) eingebracht wird.

2. Sprühverfahren nach Anspruch 1, **dadurch gekennzeichnet, dass** als Applikationsbehälter (10) eine Wegwerfspritze oder eine Wegwerfpipette eingesetzt wird.

3. Sprühverfahren nach Anspruch 1 oder 2, **dadurch gekennzeichnet, dass** der Applikationsbehälter (10) mit Applikationsspitze (14; 14a; 14b) aus einem Set von unterschiedlichen Applikationsbehältern mit unterschiedlichen Applikationsspitzen ausgewählt wird.

4. Sprühverfahren nach einem der vorangehenden Ansprüche, **dadurch gekennzeichnet, dass** die Applikationsspitze (14; 14a; 14b) des Applikationsbehälters (10) in Hauptströmungsrichtung des Gasstroms (L) gemessen von einer axialen Hauptdüse (24) des Sprühkopfs (20) in einem Abstand (d_{S}) von 0.01-5 cm, vorzugsweise 0.1-0.5 cm, angeordnet wird.

5. Sprühverfahren nach einem der vorangehenden Ansprüche, **dadurch gekennzeichnet, dass** ein Sprühkopf (20) eingesetzt wird, der zwei gegenüberliegende Hornluftdüsen (25) aufweist, welche zwei einwärts gerichtete Horngasströme erzeugen, und dass die Applikationsspitze (14; 14a; 14b) des Applikationsbehälters (10) im Kreuzungsbereich der beiden Horngasströme angeordnet wird.

6. Sprühverfahren nach einem der vorangehenden Ansprüche, **dadurch gekennzeichnet, dass** das Substrat (S) während der Beaufschlagung mit der zerstäubten Substanz (F) in einer oder zwei Dimensionen quer zur Hauptströmungsrichtung des Gasstroms (L) bewegt wird.

7. Sprühverfahren nach einem der vorangehenden Ansprüche, **dadurch gekennzeichnet, dass** der Sprühkopf (20) und der Applikationsbehälter (10) mit Applikationsspitze (14; 14a; 14b) während der Beaufschlagung des Substrats (S) mit der zerstäubten Substanz (F) in einer oder zwei Dimensionen quer zur Hauptströmungsrichtung des Gasstroms (L) bewegt werden.

8. Sprühverfahren nach einem der vorangehenden Ansprüche, **dadurch gekennzeichnet, dass** der Sprühkopf (20) mit einem Druck von 1-10 bar, vorzugsweise 3-4 bar, und einem Gasdurchsatz von 100-1000 l/min, vorzugsweise 200-600 l/min, betrieben wird.

9. Sprühverfahren nach einem der vorangehenden Ansprüche, wobei gleichzeitig oder sequentiell die Applikationsspitzen (14; 14a; 14b) von mehr als einem Applikationsbehälter (10) in den Gasstrom L eingebracht werden und die in den Applikationsbehältern (10) enthaltenen, unterschiedlichen zu sprühenden Substanzen entweder nacheinander oder gleichzeitig in den Gasstrom L abgegeben und zerstäubt werden.

10. Sprühvorrichtung zur Durchführung des Sprühverfahrens nach einem der vorangehenden Ansprüche, mit einem Sprühkopf (20) zur Erzeugung eines das Substrat (S) beaufschlagenden Gasstroms (L) und mit einem mit einer Applikationsspitze (14; 14a; 14b) ausgestatteten Applikationsbehälter (10) zur Aufnahme einer im Gasstrom zu zerstäubenden Substanz (F), **gekennzeichnet durch** einen Roboter (30; 130) zur Aufnahme des Applikationsbehälters (10) aus einem Vorratsbehälter (81) und zur Einbringung der Applikationsspitze (14; 14a; 14b) des aufgenommenen Applikationsbehälters (10) in den vom Sprühkopf (20) erzeugten Gasstrom (L) quer zur Hauptströmungsrichtung des Gasstroms (L) an einer Position ausserhalb des Sprühkopfs (20) in einem Abstand (d_{S}) zu diesem.

11. Sprühvorrichtung nach Anspruch 10, **gekennzeichnet durch** Austragmittel (12, 13, 53) zur Ausbringung von im Applikationsbehälter (10) enthaltener Substanz (F) aus dem Applikationsbehälter (10) in den vom Sprühkopf (20) erzeugten Gasstrom (L).

12. Sprühvorrichtung nach Anspruch 10 oder 11, **dadurch gekennzeichnet, dass** der Roboter (30; 130) dazu ausgebildet ist, einen teilweise oder ganz entleerten Applikationsbehälter (10) aus dem Gasstrom (L) zu entnehmen und vorzugsweise in einen Abfallbehälter (82) zu werfen.

13. Sprühvorrichtung nach einem der Ansprüche 10-12, **dadurch gekennzeichnet, dass** sie dazu ausgebildet ist, den Abstand zwischen dem Sprühkopf (20) und der Applikationsspitze (14; 14a; 14b) und/oder den Abstand zwischen der Applikationsspitze (14; 14a; 14b) und dem Substrat (S) automatisch oder manuell zu verstellen.

14. Sprühvorrichtung nach einem der Ansprüche 10-13, **dadurch gekennzeichnet, dass** sie zur sequentiellen oder gleichzeitigen Einführung der Applikationsspitzen (14; 14a; 14b) von zwei oder mehreren Applikationsbehältern (10) in den Gasstrom (L) ausgebildet ist.

15. Sprühvorrichtung nach einem der Ansprüche 10-14, **dadurch gekennzeichnet, dass** der Applikationsbehälter (10) eine Wegwerfspritze oder eine Wegwerfpipette ist.

16. Sprühvorrichtung nach einem der Ansprüche 10-15, **dadurch gekennzeichnet, dass** die Applikationsspitze (14a) gerade ausgebildet ist und eine Auslassöffnung der Applikationsspitze (14a) rechtwinklig in den Gasstrom (L) ausmündet, so dass die zu applizierende Substanz rechtwinklig zur Hauptströmungsrichtung des Gasstroms (L) in diesen einbringbar ist.

17. Sprühvorrichtung nach einem der Ansprüche 10-15, **dadurch gekennzeichnet, dass** die Applikationsspitze gerade ausgebildet ist und mindestens eine seitliche Auslassöffnung aufweist, durch die die zu applizierende Substanz in den Gasstrom (L) einbringbar ist.

18. Sprühvorrichtung nach einem der Ansprüche 10-15, **dadurch gekennzeichnet, dass** die Applikationsspitze (14b) abgewinkelt ausgebildet ist und eine Auslassöffnung der Applikationsspitze (14b) in Richtung des Gasstroms (L) ausmündet, so dass die zu applizierende Substanz parallel zur Hauptströmungsrichtung des Gasstroms (L) in diesen einbringbar ist.

19. Sprühvorrichtung nach einem der Ansprüche 10-18, **dadurch gekennzeichnet, dass** der Roboter (130) dazu ausgebildet ist, den Sprühkopf (20) zusammen mit dem Applikationsbehälter (10) in wenigstens einer Dimension quer zur Hauptströmungsrichtung des Gasstroms (L) zu bewegen.

20. Sprühvorrichtung nach einem der Ansprüche 10-19, **gekennzeichnet durch** einen zweiten Roboter (60) zur Halterung eines Substrats (S) und zur Bewegung desselben in mindestens einer Richtung quer zur Hauptströmungsrichtung des Gasstroms (L).

21. Sprühvorrichtung nach einem der Ansprüche 10-20, **gekennzeichnet durch** eine elektronische Steuerung (100) für den Roboter (30; 130) und gegebenenfalls auch den zweiten Roboter (60), für Austragmittel (12, 13, 53) zur Ausbringung von im Applikationsbehälter (10) enthaltener Substanz (F) aus dem Applikationsbehälter (10) und für eine Gaszufuhr zum Sprühkopf (20), wobei die Steuerung (100) so programmiert ist, dass sie die für die Durchführung des Sprühverfahrens erforderlichen Abläufe selbständig steuern kann.

22. Sprühvorrichtung nach Anspruch 21, **dadurch gekennzeichnet, dass** die elektronische Steuerung (100) so programmiert ist, dass sie die für die Durchführung des Sprühverfahrens erforderlichen Abläufe und Parameter iterativ optimiert.

## Claims

1. Spraying process for coating a substrate with a substance (F) atomised in a stream of gas, wherein a spray head (20) is used to generate a stream of gas (L) that acts upon the substrate (S), and wherein the substance (F) is present in a syringe-like application container (10) equipped with an application tip (14; 14a; 14b) and, without contact with the spray head (20), is introduced from the application container into the stream of gas (L) and thereby atomised, **characterised in that** the application tip (14; 14a; 14b) of the application container (10) containing the substance (F) is introduced into the stream of gas (L) outside the spray head (20) at a distance (dₛ) therefrom and transversely with respect to the main direction of flow of the stream of gas (L), and the substance (F) is introduced into the stream of gas (L) at that location.

2. Spraying process according to claim 1, **characterised in that** a disposable syringe or a disposable pipette is used as application container (10).

3. Spraying process according to claim 1 or 2, **characterised in that** the application container (10) with the application tip (14; 14a; 14b) is selected from a set of different application containers having different application tips.

4. Spraying process according to any one of the preceding claims, **characterised in that** the application tip (14; 14a; 14b) of the application container (10) is arranged at a distance (dₛ) of 0.01-5 cm, preferably 0.1-0.5 cm, from an axial main nozzle (24) of the spray head (20), measured in the main direction of flow of the stream of gas (L).

5. Spraying process according to any one of the preceding claims, **characterised in that** a spray head (20) is used which has two oppositely located horn air nozzles (25) which generate two inwardly directed horn gas streams, and the application tip (14; 14a, 14b) of the application container (10) is arranged in the region of intersection of the two horn gas streams.

6. Spraying process according to any one of the preceding claims, **characterised in that** the substrate (S), while being acted upon by the atomised substance (F), is moved in one or two dimensions transversely with respect to the main direction of flow of the stream of gas (L).

7. Spraying process according to any one of the preceding claims, **characterised in that**, while the substrate (S) is being acted upon by the atomised substance (F), the spray head (20) and the application container (10) with the application tip (14; 14a; 14b) are moved in one or two dimensions transversely with respect to the main direction of flow of the stream of gas (L).

8. Spraying process according to any one of the preceding claims, **characterised in that** the spray head (20) is operated at a pressure of 1-10 bar, preferably 3-4 bar, and a gas throughput of 100-1000 l/min, preferably 200-600 l/min.

9. Spraying process according to any one of the preceding claims, wherein the application tips (14; 14a; 14b) of more than one application container (10) are introduced simultaneously or sequentially into the stream of gas L, and the different substances to be sprayed that are contained in the application containers (10) are delivered into the stream of gas L and atomised either in succession or simultaneously.

10. Spray device for carrying out the spraying process according to any one of the preceding claims, having a spray head (20) for generating a stream of gas (L) that acts upon the substrate (S) and an application container (10) equipped with an application tip (14; 14a; 14b) for holding a substance (F) to be atomised in the stream of gas, **characterised by** a robot (30; 130) for picking up the application container (10) from a storage container (81) and for introducing the application tip (14; 14a; 14b) of the application container (10) picked up into the stream of gas (L) generated by the spray head (20) transversely with respect to the main direction of flow of the stream of gas (L) at a position outside the spray head (20) and at a distance (dₛ) therefrom.

11. Spray device according to claim 10, **characterised by** discharge means (12, 13, 53) for discharging the substance (F) contained in the application container (10) from the application container (10) into the stream of gas (L) generated by the spray head (20).

12. Spray device according to claim 10 or 11, **characterised in that** the robot (30; 130) is configured to remove a partly or fully emptied application container (10) from the stream of gas (L) and preferably throw it into a waste container (82).

13. Spray device according to any one of claims 10-12, **characterised in that** it is configured to adjust the distance between the spray head (20) and the application tip (14; 14a; 14b) and/or the distance between the application tip (14; 14a; 14b) and the substrate (S) automatically or manually.

14. Spray device according to any one of claims 10-13, **characterised in that** it is configured for sequential or simultaneous introduction of the application tips (14; 14a; 14b) of two or more application containers (10) into the stream of gas (L).

15. Spray device according to any one of claims 10-14, **characterised in that** the application container (10) is a disposable syringe or a disposable pipette.

16. Spray device according to any one of claims 10-15, **characterised in that** the application tip (14a) is straight and an outlet opening of the application tip (14a) opens into the stream of gas (L) at a right-angle, so that the substance to be applied is introducible into the stream of gas (L) at a right-angle to the main direction of flow thereof.

17. Spray device according to any one of claims 10-15, **characterised in that** the application tip is straight and has at least one lateral outlet opening through which the substance to be applied is introducible into the stream of gas (L).

18. Spray device according to any one of claims 10-15, **characterised in that** the application tip (14b) is bent at an angle and an outlet opening of the application tip (14b) opens in the direction of the stream of gas (L), so that the substance to be applied is introducible into the stream of gas (L) parallel to the main direction of flow thereof.

19. Spray device according to any one of claims 10-18, **characterised in that** the robot (130) is configured to move the spray head (20) together with the application container (10) in at least one dimension transversely with respect to the main direction of flow of the stream of gas (L).

20. Spray device according to any one of claims 10-19, **characterised by** a second robot (60) for holding a substrate (S) and for moving the substrate in at least one direction transversely with respect to the main direction of flow of the stream of gas (L).

21. Spray device according to any one of claims 10-20, **characterised by** an electronic controller (100) for the robot and, where applicable, also for the second robot (60), for discharge means (12, 13, 53) for discharging substance (F) contained in the application container (10) from the application container (10) and for supplying gas to the spray head (20), the controller (100) being programmed so that it can autonomously control the workflows necessary for carrying out the spraying process.

22. Spray device according to claim 21, **characterised in that** the electronic controller (100) is programmed so that it iteratively optimises the workflows and parameters necessary for carrying out the spraying process.

## Revendications

1. Procédé de pulvérisation pour revêtir un substrat avec une substance (F) atomisée dans un flux de gaz, dans lequel un flux de gaz (L) sollicitant le substrat (S) est généré au moyen d'une tête de pulvérisation (20), la substance (F) se présentant dans un récipient d'application (10) de type seringue, muni d'une pointe d'application (14 ; 14a, 14b), et étant introduite depuis ledit récipient dans le flux de gaz (L) sans contact avec la tête de pulvérisation (20) en étant atomisée par ledit flux,
**caractérisé en ce que**
la pointe d'application (14 ; 14a ; 14b) du récipient d'application (10) contenant la substance (F) est introduite dans le flux de gaz (L) à l'extérieur de la tête de pulvérisation (20) à une distance (ds) de celle-ci transversalement à la direction d'écoulement principal du flux de gaz (L), et la substance (F) est introduite dans le flux de gaz (L) à cet emplacement.

2. Procédé de pulvérisation selon la revendication 1,
**caractérisé en ce que** l'on utilise comme récipient d'application (10) une seringue jetable ou une pipette jetable.

3. Procédé de pulvérisation selon la revendication 1 ou 2,
**caractérisé en ce que** le récipient d'application (10) muni de la pointe d'application (14 ; 14a ; 14b) est choisi parmi un ensemble de différents récipients d'application munis de différentes pointes d'application.

4. Procédé de pulvérisation selon l'une des revendications précédentes,
**caractérisé en ce que** la pointe d'application (14 ; 14a ; 14b) du récipient d'application (10) est disposée à une distance (ds) de 0,01 à 5 cm, de préférence de 0,1 - 0,5 cm, mesurée dans la direction d'écoulement principal du flux de gaz (L), par rapport à une buse principale axiale (24) de la tête de pulvérisation (20).

5. Procédé de pulvérisation selon l'une des revendications précédentes,
**caractérisé en ce que** l'on utilise une tête de pulvérisation (20) qui présente deux buses d'air de corne (25) opposées qui produisent deux flux de gaz de corne dirigés vers l'intérieur, et **en ce que**
la pointe d'application (14 ; 14a ; 14b) du récipient d'application (10) est disposée dans la zone de croisement des deux flux de gaz de corne.

6. Procédé de pulvérisation selon l'une des revendications précédentes,
**caractérisé en ce que** le substrat (S) est déplacé transversalement à la direction d'écoulement principal du flux de gaz (L) dans une ou dans deux dimensions pendant la sollicitation avec la substance atomisée (F).

7. Procédé de pulvérisation selon l'une des revendications précédentes,
**caractérisé en ce que** la tête de pulvérisation (20) et le récipient d'application (10) muni de la pointe d'application (14 ; 14a ; 14b) sont déplacés transversalement à la direction d'écoulement principal du flux de gaz (L) dans une ou dans deux dimensions pendant la sollicitation du substrat avec la substance atomisée (F).

8. Procédé de pulvérisation selon l'une des revendications précédentes,
**caractérisé en ce que** la tête de pulvérisation (20) fonctionne à une pression de 1 à 10 bar, de préférence de 3 à 4 bar, et à un débit de gaz de 100 à 1000 l/min, de préférence de 200 à 600 l/min.

9. Procédé de pulvérisation selon l'une des revendications précédentes,
dans lequel les pointes d'application (14 ; 14a ; 14b) de plus d'un récipient d'application (10) sont introduites simultanément ou séquentiellement dans le flux de gaz L, et les différentes substances à pulvériser contenues dans les récipients d'application (10) sont distribuées et atomisées dans le flux de gaz L soit successivement soit simultanément.

10. Dispositif de pulvérisation pour mettre en œuvre le procédé de pulvérisation selon l'une des revendications précédentes, comportant une tête de pulvérisation (20) pour générer un flux de gaz (L) sollicitant le substrat (S) et comportant un récipient d'application (10) muni d'une pointe d'application (14 ; 14a ; 14b) pour recevoir une substance (F) à atomiser dans le flux de gaz,
**caractérisé par** un robot (30 ; 130) pour recevoir le récipient d'application (10) depuis un récipient de stockage (81) et pour introduire la pointe d'application (14 ; 14a ; 14b) du récipient d'application reçu (10) dans le flux de gaz (L), généré par la tête de pulvérisation (20), transversalement à la direction d'écoulement principal du flux de gaz (L) à une position à l'extérieur de la tête de pulvérisation (20) à une distance (ds) de celle-ci.

11. Dispositif de pulvérisation selon la revendication 10,
**caractérisé par** des moyens d'extraction (12, 13, 53) pour extraire une substance (F), contenue dans le récipient d'application (10), hors du récipient d'application (10) jusque dans le flux de gaz (L) généré par la tête de pulvérisation (20).

12. Dispositif de pulvérisation selon la revendication 10 ou 11,
**caractérisé en ce que** le robot (30 ; 130) est réalisé pour enlever un récipient d'application (10), vidé partiellement ou complètement, hors du flux de gaz (L) et pour le jeter de préférence dans un récipient à déchets (82).

13. Dispositif de pulvérisation selon l'une des revendications 10 à 12,
**caractérisé en ce qu'**il est réalisé pour régler automatiquement ou manuellement la distance entre la tête de pulvérisation (20) et la pointe d'application (14 ; 14a ; 14b) et/ou la distance entre la pointe d'application (14 ; 14a ; 14b) et le substrat (S).

14. Dispositif de pulvérisation selon l'une des revendications 10 à 13,
**caractérisé en ce qu'**il est réalisé pour introduire séquentiellement ou simultanément les pointes d'application (14 ; 14a ; 14b) de deux ou de plusieurs récipients d'application (10) dans le flux de gaz (L).

15. Dispositif de pulvérisation selon l'une des revendications 10 à 14,
**caractérisé en ce que** le récipient d'application (10) est une seringue jetable ou une pipette jetable.

16. Dispositif de pulvérisation selon l'une des revendications 10 à 15,
**caractérisé en ce que** la pointe d'application (14a) est réalisée de façon droite, et une ouverture de sortie de la pointe d'application (14a) débouche à angle droit dans le flux de gaz (L), de sorte que la substance à appliquer peut être introduite dans le flux de gaz (L) à angle droit par rapport à la direction d'écoulement principal de celui-ci.

17. Dispositif de pulvérisation selon l'une des revendications 10 à 15,
**caractérisé en ce que** la pointe d'application est réalisée de façon droite et présente au moins une ouverture de sortie latérale par laquelle la substance à appliquer peut être introduite dans le flux de gaz (L).

18. Dispositif de pulvérisation selon l'une des revendications 10 à 15,
**caractérisé en ce que** la pointe d'application (14b) est réalisée de façon coudée, et une ouverture de sortie de la pointe d'application (14b) débouche dans la direction du flux de gaz (L), de sorte que la substance à appliquer peut être introduite dans le flux de gaz (L) parallèlement à la direction d'écoulement principal de celui-ci.

19. Dispositif de pulvérisation selon l'une des revendications 10 à 18,
**caractérisé en ce que** le robot (130) est réalisé pour déplacer la tête de pulvérisation (20) conjointement avec le récipient d'application (10) dans au moins une dimension transversalement à la direction d'écoulement principal du flux de gaz (L).

20. Dispositif de pulvérisation selon l'une des revendications 10 à 19,
**caractérisé par** un second robot (60) pour maintenir un substrat (S) et pour déplacer celui-ci dans au moins une direction transversalement à la direction d'écoulement principal du flux de gaz (L).

21. Dispositif de pulvérisation selon l'une des revendications 10 à 20,
**caractérisé par** une commande électronique (100) pour le robot (30 ; 130) et le cas échéant également pour le second robot (60), pour des moyens d'extraction (12, 13, 53) pour extraire une substance (F), contenue dans le récipient d'application (10), hors du récipient d'application (10), et pour une alimentation en gaz de la tête de pulvérisation (20), la commande (100) étant programmée de manière à pouvoir commander automatiquement les opérations nécessaires pour mettre en œuvre le procédé de pulvérisation.

22. Dispositif de pulvérisation selon la revendication 21,
**caractérisé en ce que** la commande électronique (100) est programmée de manière à optimiser de manière itérative les opérations et les paramètres nécessaires pour mettre en œuvre le procédé de pulvérisation.
